# EUROPEAN PATENT APPLICATION

(11) **EP 4 488 515 A1**
(43) Date of publication of application: **08.01.2025**
(21) Application number: 23184199.0
(22) Date of filing: 07.07.2023
(51) Int. Cl.: F03D 80/50, H02K 7/18, H02K 15/00

(54) **HANDLING APPARATUS**

(71) Applicant: Siemens Gamesa Renewable Energy A/S, 7330 Brande (DK)
(72) Inventor: Jensen, Martin Bjerregaard, 7451 Sunds (DK); Theisen, Soeren Henneberg, 7430 Ikast (DK); Troelsen, Henrik Jason, 7400 Herning (DK)
(74) Representative: SGRE-Association

(57) **Abstract**

The invention describes a handling apparatus (1) for a wind turbine generator (2), comprising a holding frame (11, 12) adapted to receive and hold the generator (2); a height-adjustable platform (14) adapted to engage with the drive-end (2DE) of the generator (2); a stator suspension assembly (13) adapted for mounting on the holding frame (11, 12) and for connection to the non-drive end (2NDE) of the stator (22); and a turning means (131) adapted to turn the stator suspension assembly (13) about the rotation axis (2A) of the generator (2). The invention further describes a method of performing a generator maintenance procedure using such a generator handling apparatus (1).

## Description

### Background

The extended service life of modern large wind turbines can exceed the lifetime of various major components. Therefore, at some point during the service life of the wind turbine, it may become necessary to replace a component when it becomes defective. The duration and expense of the maintenance procedure depends to a large extent on the accessibility of the defective component. For example, the main bearing of a generator, located at the drive end of the generator between rotor and stator, is difficult to access. In the case of a very large capacity wind turbine, for which the generator diameter is in the order of several meters, a bearing replacement procedure - involving disassembly of the generator, removal of the defective bearing and installation of the new bearing, and then re-assembly of the generator - can take several days. The unfavourably long duration is particularly a problem in the case of offshore wind turbines, since hire of a jack-up vessel (required to carry the heavy equipment and to accommodate the replacement procedure) is very costly. A further problem is that the airgap between rotor and stator is very small - only a few mm - but may vary slightly about the circumference of the generator. The "shape" of the airgap is determined primarily by the configuration of rotor, stator and main bearing and can be regarded as unique for each generator. Therefore, it is necessary that the shape of the airgap of an already operational wind turbine generator is reinstated after any maintenance task that involves removal of the main bearing. Known procedures of monitoring and reinstating the airgap are time-consuming and costly.

It is therefore an object of the invention to provide a quicker and more economical way of performing a maintenance procedure for such a wind turbine.

This object is achieved by the claimed generator handling apparatus and by the claimed method of performing a generator maintenance procedure.

### Description

The type of wind turbine generator discussed herein shall be understood to have a diameter in the order of 8 m, and can weigh several hundred metric tonnes. In a generator design with the rotating field arranged about the stationary armature, the bearing between rotor and stator can have a diameter approaching the diameter of the rotor.

According to the invention, the handling apparatus comprises a holding frame adapted to receive and hold the generator with its drive end facing downwards; a height-adjustable platform adapted to receive the drive-end of the stator; a stator suspension assembly adapted for mounting on the holding frame and for connection to the non-drive end of the stator; and a turning means adapted to turn the stator suspension assembly about the rotation axis of the generator.

The generator is handled with its drive end facing downwards, i.e. the generator is handled in an orientation in which its rotation axis is vertical and its drive end faces downwards.

An advantage of the inventive generator handling apparatus is that it can significantly reduce the duration of a generator maintenance procedure. The major difficulties in performing maintenance on the type of generator described herein arises from the large dimensions of the components, the weight of the rotor, stator and main bearing and the need to avoid any kind of distortion in these components. The inventive handling apparatus, with its stator suspension assembly and turning means, facilitates a relatively quick detachment of the front end assembly for a maintenance task and reinstatement of the highly critical airgap shape.

According to the invention, the method of performing a maintenance procedure using such a handling apparatus comprises steps of arranging the generator in the handling apparatus; measuring the generator airgap with the aid of the rotatable stator suspension assembly; removing the front end assembly from the drive end of the generator and performing the intended maintenance operation; reinstalling the front end assembly; and reinstating the generator airgap with the aid of the rotatable stator suspension assembly.

Particularly advantageous embodiments and features of the invention are given by the dependent claims, as revealed in the following description. Features of different claim categories may be combined as appropriate to give further embodiments not described herein.

The generator handling apparatus can be used to access any part of the generator that may require maintenance during the service life of the wind turbine. In the following, a procedure to exchange the main bearing of the generator is described, and the expressions "generator handling apparatus" and "main bearing exchange apparatus" may be used interchangeably herein.

In an initial step, the generator is lowered into the holding frame of the handling apparatus. After releasing the lifting apparatus (e.g. a jack-up vessel crane), the handling apparatus must bear the complete weight of the generator. However, much of the generator mass is concentrated at the stator. Therefore, in a particularly preferred embodiment of the invention, the holding frame is realised to carry the weight of the rotor (rotor housing, magnet assembly etc.), while the height-adjustable platform is realised to carry the weight of the stator (stator frame, windings etc.) as well as the weight of the front end assembly, which can comprise a front plate, the main bearing, and an anti-ovalization ring.

The holding frame can be any suitable structure that is large enough to surround or enclose the generator, for example a framework with several upright structures arranged (equidistantly or otherwise) about the rotor housing. The stator suspension assembly shall be understood to be supported by the holding frame, for example by a suitable arrangement of beams carried by the upright structures of the holding frame. In a straightforward realisation, the holding frame comprises a square or rectangular arrangement with four uprights at each corner.

The holding frame preferably comprises a means of securely holding the rotor housing, for example a clamp or gripper at each of its uprights. These grippers are preferably arranged at a suitable height above ground so that there is sufficient room for the height-adjustable platform underneath the generator.

The platform is preferably part of a platform assembly, which is preferably equipped with a robust means of raising and lowering the platform, for example an arrangement of hydraulic jacks. In an exemplary embodiment, a platform base or bed (which can travel along rails or tracks) can accommodate four hydraulic jacks arranged to raise or lower the platform as necessary. The side of the platform that receives the generator front end is preferably shaped to complement the shape of the front cover, so that, when the front end assembly rests on the platform, its weight is evenly distributed on the upper surface of the platform.

The turning means can be realized to turn the stator suspension assembly by any suitable amount, for example a full rotation or a fraction of a full rotation. In a preferred embodiment of the invention, the turning means is adapted to turn the stator suspension assembly through 180°, since this is sufficient for an airgap measurement procedure as will be explained below.

During the inventive method, the platform is required in the initial and final stages, as well as for some intermediate stages. However, between these stages, full access to the generator drive end is required. Therefore, in a preferred embodiment of the invention, the platform can be moved out from the holding frame, for example using a system of rails that extend along the ground, from inside the holding frame to the outside, passing between two of the uprights.

An underlying principle of the invention is that the handling apparatus can be used to ensure that the airgap is maintained, i.e. the reinstated airgap between rotor and stator after replacing the main bearing will be identical to the airgap prior to removal of the main bearing. This advantageous aspect is facilitated by the stator suspension assembly and turning means of the inventive handling apparatus and is explained in the following.

An n initial procedure to arrange the generator in the handling apparatus comprises arranging the height-adjustable platform within the holding frame to receive the drive-end of the stator; lowering the generator into the holding frame until its drive end rests on the height-adjustable platform; and then connecting the stator suspension assembly to lifting brackets present at the non-drive end of the stator.

In a subsequent step, the weight of the stator is transferred to the stator suspension assembly. This can be facilitated by a vertical displacement means adapted to raise the stator suspension assembly. For example, a hydraulic jack can be arranged at the upper end of each upright of the holding frame. In such an embodiment, the handling apparatus can be assumed to comprise a means of actuating these hydraulic jacks, collectively and/or individually. To transfer the weight of the stator to the stator suspension assembly, the jacks are carefully extended upwards, while the loads on the holding frame and platform are monitored. Eventually, the weight of the stator will be carried entirely by the stator suspension assembly, and the platform can then be lowered, and the procedure to detach the front end assembly can commence.

Before removing the front end assembly from the generator, the inventive method comprises a step of measuring the generator airgap. To this end, a technician measures the distance between rotor and stator at several points about the generator circumference and records the measurements. The turning means is then actuated to turn the suspended stator through a partial rotation, for example 180°. The technician again measures the distance between rotor and stator at several points about the generator circumference and records the measurements. The turning means is then actuated to turn the suspended stator back to its initial position.

The front end assembly can now be removed by first removing the platform, removing a first set of fasteners (which would otherwise be hidden by the platform), returning the platform and raising it to receive the front end assembly, and removing the remaining fasteners. The detached front end assembly, resting on the platform, is now moved outside the holding frame to facilitate a maintenance operation, for example replacement of the main bearing.

After the new bearing is secured to the generator front plate, the front end assembly is re-installed by moving the height-adjustable platform back inside the holding frame; and bolted onto the drive end of the generator using the reverse order of the procedure described above.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine generator;
Figure 2 shows an exemplary embodiment of the inventive generator handling apparatus;
Figure 3 - 5 show stages in a maintenance procedure according to the invention;
Figure 6 shows the front end assembly on the platform after moving this from underneath the generator.
Figure 7 shows an exemplary embodiment of the height-adjustable platform tool of the inventive generator handling apparatus.

In the diagrams, like numbers refer to like objects throughout. Objects in the diagrams are not necessarily drawn to scale.

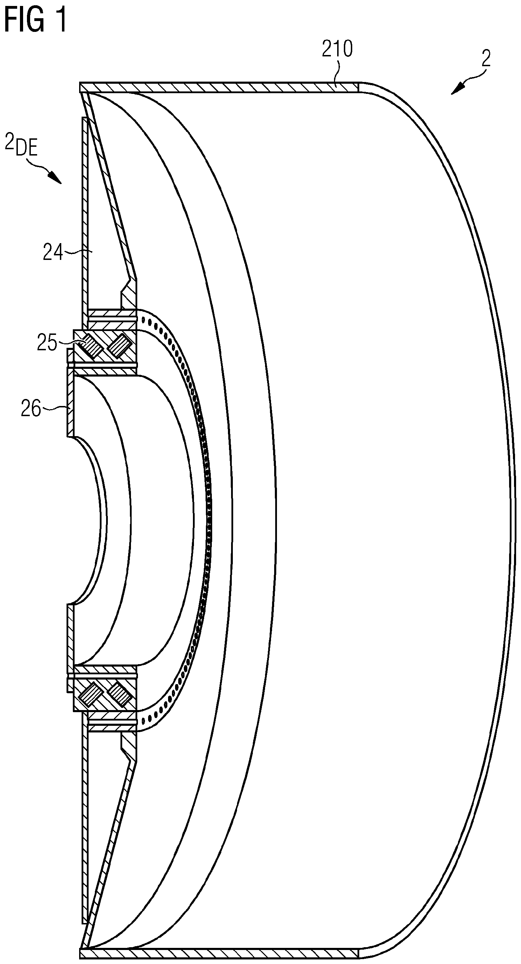

Figure 1 shows parts of a wind turbine generator 2 of the type which can be handled using the inventive generator handling apparatus 1. The diagram shows the housing 210 of an outer rotor 21 or field (which carries an arrangement of magnets), and the stator frame 220 of an inner stator 22 or armature (which carries an arrangement of coils). For clarity, the actual field and armature are not shown in the diagram. The outer rotor is turned by the aerodynamic rotor of the wind turbine, i.e. the wind turbine hub is directly connected to the drive end of the generator 2. The outer diameter of the generator 2 can be in the order of 8 m, and, when loaded with field and armature, its mass can be in the order of several hundred metric tonnes.

At the drive end, a main bearing 25 of the generator 2 ensures smooth rotation of the field about the stationary armature. The drive end of the generator 2 is closed off by a front cover 24, and an anti-ovalization ring 26 is installed to prevent distortion of the rotor 21, whose own weight would otherwise cause it to lose its required circular shape. Together, the bearing 25, front cover 24 and anti-ovalization ring 26 at the drive end 2DE of the generator are referred to in the following as the "front end assembly" 24, 25, 26.

The bearing 25 may require maintenance at some point during the lifetime of the wind turbine. To avoid loss of earnings during downtime, it is desirable to minimize the duration of any bearing maintenance or replacement procedure.

To carry out a replacement or repair procedure on such a wind turbine generator main bearing, the generator 2 is removed from the wind turbine nacelle as explained above. For example, in the case of an offshore wind turbine, a bearing replacement or repair procedure may be carried out on the deck of a jack-up vessel after transferring the generator from the nacelle onto the deck.

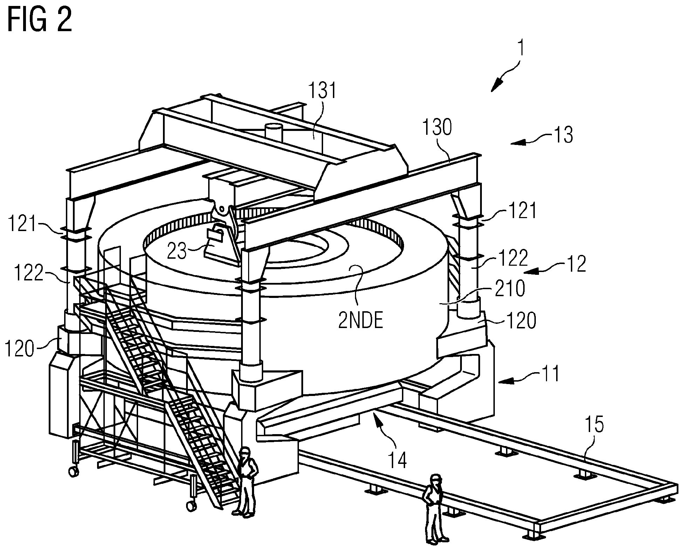

Figure 2 shows an exemplary embodiment of the inventive generator handling apparatus 1, which allows the main bearing to be removed and replaced without having to dismantle the entire generator 2. The handling apparatus 1 comprises three main parts: a lower part 11 which facilitates access to a front end assembly 24, 25 of the generator; an intermediate part 12 which serves to support the rotor 21; and an upper part 13 which facilitates manipulation of the stator 22.

In this exemplary embodiment, the lower part 11 has four supporting structures 112 which bear the intermediate part 12, i.e. the intermediate part 12 can be assembled on the lower part 11 in a preparatory step. The four supporting structures 112 of the lower part are designed to allow a front end assembly 24, 25 of the generator to be moved into or out of the space between them. Here, the lower part 11 comprises a set of tracks or rails 15 to allow a moveable platform 14 to be moved into or out of the space between the four supporting structures 112.

The intermediate part 12 also comprises four supporting structures 122 or uprights which rest on the corresponding uprights 112 of the lower part 11. In this embodiment, the uprights 122 of the intermediate part 12 serve to support a framework 130 of the upper part 13. These four supporting structures 122 also carry grippers 120 that can be actuated to grip the rotor housing 210.

The upper part 13 comprises a suspension assembly 13 which is adapted to be secured to a lifting bracket 23 of the stator 22, allowing the stator 22 to be suspended from the upper part 13. The suspension assembly 13 can be rotated using a turning drive unit 131, which is configured to turn the suspension assembly 13 - and the suspended stator 22 - by a desired amount, for example through 180°.

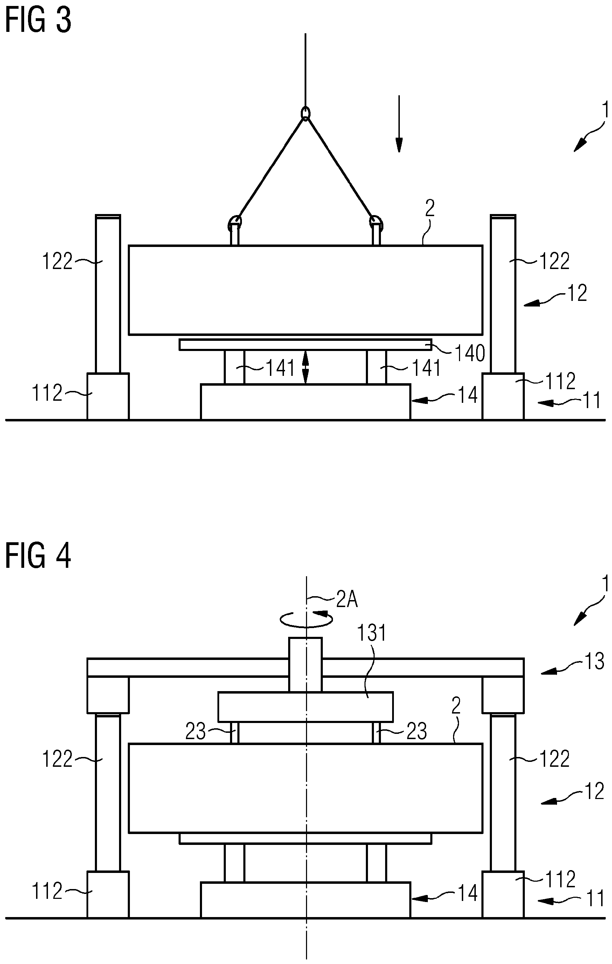

Figure 3 - 5 show stages in a maintenance procedure according to the invention.

In Figure 3, a generator 2 is being lowered into place between the supporting structures 112, 122 of the intermediate part 12 and the lower part 11. The platform 14 is raised to receive the generator drive end. To this end, the platform assembly 14 is equipped with a suitable number of hydraulic jacks 141 that can be actuated to extend in a vertical direction. After lowering the generator 2 into place, the lower rim of the rotor housing 210 rests on the grippers 120, and the drive end of the generator rests on the raised platform 140 so that the platform assembly 14 essentially bears the weight of the stator.

In Figure 4, the upper part 13 is placed onto the supporting structures 122 of the intermediate part 12, and the lifting brackets 23 of the stator 22 are secured to the suspension assembly 13.

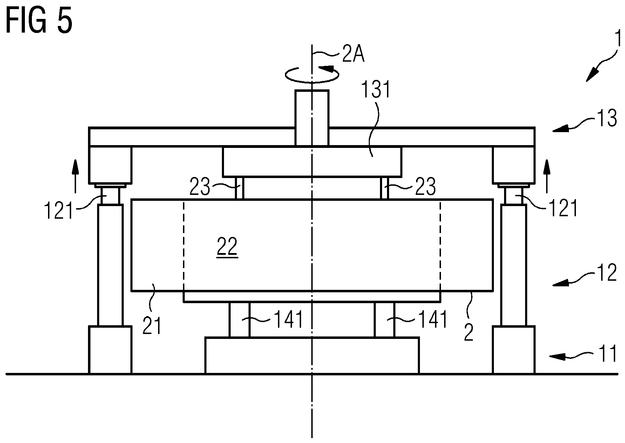

In Figure 5, the four jacks 121 of the intermediate part 12 are actuated, extending them upwards until the weight of the suspended stator 22 is transferred from the platform 140 to the stator suspension assembly 131. Since the upper part 13 and intermediate part 12 are both elastic structures, it is necessary to monitor load distribution during this load transfer procedure. This can be done by monitoring pressure using suitable pressure sensors deployed in the hydraulic circuits of the jacks 121, 141. After completion of this stage, the weight of the stator 22 is carried solely by the upper part 13, and the platform 140 can be lowered. The platform assembly can then be moved away in preparation for the next stage, in which the airgap between armature and field is measured. The airgap can be measured at multiple points, for example at equidistant intervals about its circumference. The turning drive unit 131 is then actuated to rotate the stator by a suitable amount, e.g. by 180°, and the airgap is once again measured. Finally, the turning drive 131 is actuated to rotate the stator back to its initial position. Subsequently, in a procedure that will be known to the skilled person, airgap brackets are placed about the non-drive end 2NDE and the drive end 2DE of the generator 2 to maintain the airgap and to make any necessary corrections to the airgap.

The front end assembly 24, 25, 26 can now be detached from the drive end 2DE of the generator 2. After removing most fasteners from the front plate end assembly, the platform 14 is moved back underneath the generator 2 and raised to receive the front end assembly 24, 25. A remaining set of outer fasteners is removed to complete the front end assembly detachment step.

The platform 14 is then lowered again, now carrying the detached front end assembly 24, 25, 26.

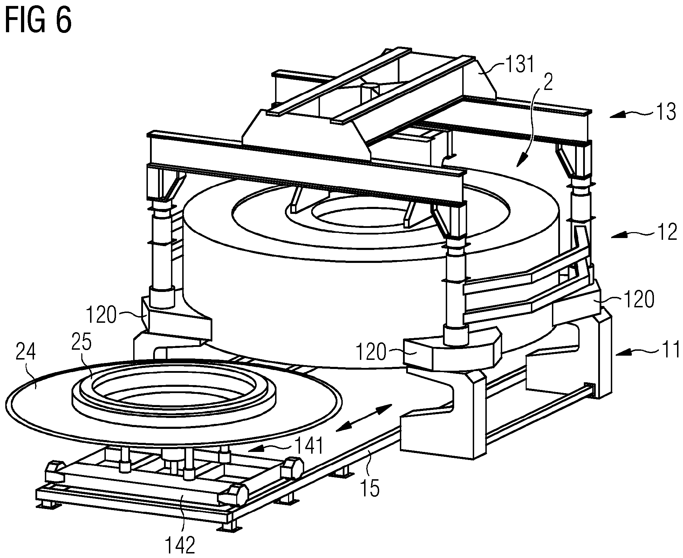

Figure 6 shows the front end assembly 24, 25 on the platform 14 after moving this from underneath the generator 2.

The defective main bearing 25 is now removed, and a new main bearing 25 is attached to the front plate 24. The platform 14, along with the refurbished front end assembly 24, 25, is then moved back underneath the generator. After raising the platform 14, the outer fasteners are replaced to secure the front end assembly 24, 25 to the generator 2. The platform 14 is lowered and removed. Technicians then tighten the remaining fasteners to complete the front end re-attachment step.

The airgap is then checked again by removing the airgap brackets and measuring all around, actuating the turning drive 131 to turn the stator 22 through 180°, measuring the airgap again, and actuating the turning drive to turn the stator 22 back through 180°.

The platform 14 is again raised to the front end 2DE of the generator 2, and the hydraulic jacks 121 are actuated to slowly lower the upper part 13 until the weight of the stator 22 is transferred from the suspension assembly 13 to the platform 14. Again, load distribution is carefully monitored during this procedure.

In a final stage, following a reverse order of steps described above, the upper and intermediate parts 13, 12 of the handling apparatus 1 are lifted off the lower part 11 so that the refurbished generator 2 can be accessed for the subsequent re-installation procedure.

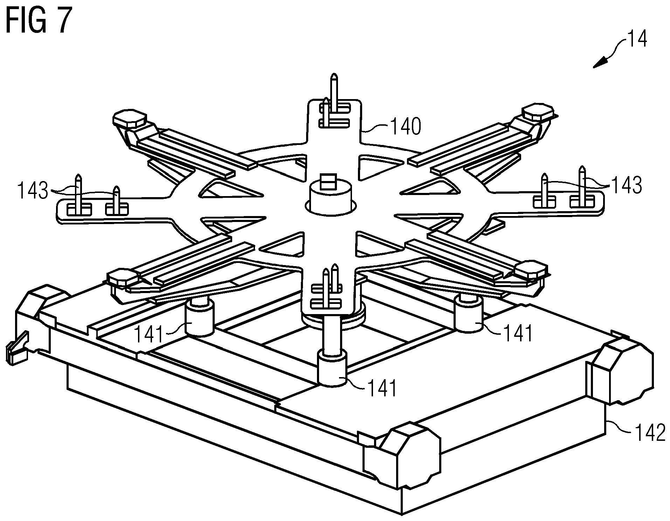

Figure 7 shows an exemplary embodiment of the height-adjustable platform tool 14. A platform bed 142 carries the platform 140, and can slide along rails 15 of the handling apparatus 1. The platform 140 itself can be described as essentially circular, with gaps between radially extending arms. The gaps facilitate access to most fasteners of the front end assembly 24, 25, 26 for the stages described in Figure 5 above. The platform 140 is raised or lowered as required, relative to the platform bed 142, by means of an arrangement of hydraulic jacks 141.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A handling apparatus (1) for a wind turbine generator (2), comprising
- a holding frame (11, 12) adapted to receive and hold the generator (2);
- a height-adjustable platform (14) adapted to engage with the drive-end (2DE) of the generator (2);
- a stator suspension assembly (13) adapted for mounting on the holding frame (11, 12) and for connection to the non-drive end (2NDE) of the stator (22); and
- a turning means (131) adapted to turn the stator suspension assembly (13) about the rotation axis (2A) of the generator (2).

2. A handling apparatus according to the preceding claim, wherein the holding frame (11, 12) is adapted to carry the weight of the rotor (21).

3. A handling apparatus according to any of the preceding claims, wherein the height-adjustable platform (14) is adapted to carry the weight of the stator (22) and a front end assembly (24, 25, 26) of the generator (2).

4. A handling apparatus according to any of the preceding claims, wherein the holding frame (11, 12) is adapted to accommodate the height-adjustable platform (14) underneath the generator (2).

5. A handling apparatus according to any of the preceding claims, comprising an arrangement of rails (15) extending to the side of the holding frame (11, 12), and wherein the height-adjustable platform (14) is adapted to move along the rails (15).

6. A handling apparatus according to any of the preceding claims, comprising a vertical displacement means (121) adapted to raise and lower the stator suspension assembly (13) .

7. A handling apparatus according to any of the preceding claims, comprising a means (141) of raising and lowering the height-adjustable platform (14).

8. A handling apparatus according to any of the preceding claims, wherein the turning means (131) is adapted to turn the stator suspension assembly (13) through 180°.

9. A method of performing a generator maintenance procedure using the generator handling apparatus (1) according to any of claims 1 to 8, which method comprises
- arranging the generator (2) in the handling apparatus (1) ;
- monitoring the generator airgap;
- removing the front end assembly (24, 25, 26) from the drive end (2DE) of the generator (2);
- reinstalling the front end assembly (24, 25, 26) after completion of a maintenance task; and
- reinstating the generator airgap.

10. A method according to the preceding claim, wherein the step of arranging the generator (2) in the handling apparatus (1) comprises:
- arranging the height-adjustable platform (14) within the holding frame (11, 12) to receive the drive-end (2DE) of the stator (22);
- lowering the generator (2) into the holding frame (11, 12) until its drive end (2DE) rests on the height-adjustable platform (14); and
- connecting the stator suspension assembly (13) to the non-drive end (2NDE) of the stator (22); and
- transferring the weight of the stator (22) to the stator suspension assembly (13).

11. A method according to the preceding claim, wherein the step of monitoring the generator airgap comprises:
- measuring the airgap;
- actuating the turning means (131) to turn the suspended stator (22) through a partial rotation;
- measuring the airgap; and
- actuating the turning means (131) to turn the suspended stator (22) back through the partial rotation.

12. A method according to the preceding claim, wherein the step of removing the front end assembly (24, 25, 26) comprises
- detaching the front end assembly (24, 25, 26) from the drive end of the generator (2); and
- moving the height-adjustable platform (14) outside the holding frame (11, 12) to facilitate a maintenance operation.

13. A method according to the preceding claim, wherein the maintenance operation comprises a step of replacing the main bearing (25).

14. A method according to the preceding claim, wherein the step of reinstalling the front end assembly (24, 25, 26) comprises
- moving the height-adjustable platform (14) back inside the holding frame (11, 12); and
- re-attaching the front end assembly (24, 25, 26) to the drive end (2DE) of the generator (2).
